# EUROPÄISCHE PATENTSCHRIFT

(11) **EP 1 084 486 B1**
(45) Veröffentlichungstag und Bekanntmachung des Hinweises auf die Patenterteilung: **27.11.2002**
(21) Anmeldenummer: 99936299.9
(22) Anmeldetag: 22.05.1999
(51) Int. Cl.: G08G 1/16

(54) **EINRICHTUNG ZUR ERHÖHUNG DER VERKEHRSSICHERHEIT**
DEVICE FOR IMPROVING ROAD SAFETY
SYSTEME POUR ACCROITRE LA SECURITE ROUTIERE

(30) Priorität: 02.06.1998 DE 19824582; 09.07.1998 DE 19830626
(43) Veröffentlichungstag der Anmeldung: 21.03.2001
(73) Patentinhaber: ROBERT BOSCH GMBH, 70442 Stuttgart (DE)
(72) Erfinder: FRESE, Thomas, D-30989 Gehrden (DE); AUMAYER, Richard, D-31199 Diekholzen (DE)
(86) Internationale Anmeldenummer: DE9901522
(87) Internationale Veröffentlichungsnummer: WO99063502

(56) Entgegenhaltungen:
- EP-A- 0 625 770
- DE-A- 19 626 114
- DE-C- 4 210 170
- FR-A- 2 655 755
- FR-A- 2 693 582

## Beschreibung

Die Erfindung betrifft eine Einrichtung zur Erhöhung der Verkehrssicherheit.

Dokument EP-A-0625770 beschreibt ein interaktives Straßeninformationssystem, bei dem Daten (Fahrtrichtung und Geschwindigkeit) von vorausfahrenden Fahrzeugen auf die nachfolgenden Fahrzeuge übertragen werden. Aus der FR-A-2655755 ist eine Vorrichtung bekannt, bei der, durch am Straßenrand angebrachte Signalisierungseinrichtungen, Informationen (z.B. Bremsvorgänge) über Gefahren von vorarifahrenden Fahrzeugen übermittelt werden.

Eine Information anderer Verkehrsteilnehmer durch alle oder durch einen Teil der Verkehrsteilnehmer würde zu einer erheblichen Verbesserung im Bereich des Verkehrsflusses und der Verkehrssicherheit beitragen.

Diese Aufgabe wird gemäß Anspruch 1 gelöst.

Gegenüber den bisherigen Verfahren zur Erkennung anderer Verkehrsteilnehmer und/oder Hindernissen, beispielsweise durch Radar- oder Ultraschallsensoren, hat die erfindungsgemäße Einrichtung den Vorteil, daß die von dem anderen Objekt gesendete Information früher als eine möglicherweise erst im äußersten Nahbereich meßbare Annäherung zur Verfügung steht, insbesondere daß die in dem anderen Objekt vorhandenen Informationen, beispielsweise die Fahrtrichtung oder eine Spurwechselabsicht, bereits empfangen und im eigenen Fahrzeug berücksichtigt werden kann, bevor das eigentliche Ereignis, auf das das eigene Fahrzeug reagieren muß, eintritt.

Außerdem können mit der erfindungsgemäßen Einrichtung Objekte berücksichtigt werden, die durch Abstandsmeßsysteme nur schwer oder verfälscht erfaßt werden. So können durchaus Fußgänger mit einem Sender der erfindungsgemäßen Einrichtung versehen werden. Lastkraftwagen mit einer äußerst flachen Ladefläche, beispielsweise leere Autotransporter, können mit der erfindungsgemäßen Einrichtung als solche erkannt werden, während eine Erfassung mit Abstandsmeßsystemen häufig die Ladefläche "übersieht".

Obwohl eine positive Auswirkung von erfindungsgemäßen Einrichtungen am größten ist, wenn praktisch alle Fahrzeuge und gegebenenfalls andere Objekte mit erfindungsgemäßen Einrichtungen versehen sind, kann bereits die Ausrüstung einzelner Gruppen von Verkehrsteilnehmern, beispielsweise Fahrer einer speziellen Automarke, vorteilhaft sein.

Insgesamt ist mit der erfindungsgemäßen Einrichtung eine Erhöhung der Sicherheit, ein besserer Verkehrsfluß und damit auch eine größere Schonung der Umwelt möglich.

Eine besonders vorteilhafte Ausgestaltung der erfindungsgemäßen Einrichtung besteht darin, daß die Objekte Fahrzeuge sind und daß die sicherheitsrelevanten Daten Betriebsdaten des jeweiligen Fahrzeugs enthalten. Damit können insbesondere anderen Fahrzeugen Informationen aus der Vergangenheit, gegenwärtige Informationen und Informationen über das zukünftige Verhalten des Fahrzeugs übermittelt werden.

Bei dieser Ausgestaltung ist vorzugsweise vorgesehen, daß die Betriebsdaten von mindestens einer anderen Einrichtung des Fahrzeugs über ein Bus-System zuführbar sind. Da in modernen Fahrzeugen ohnehin ein wesentlicher Teil der Informationen über ein Bus-System ausgetauscht wird, insbesondere über den sogenannten CAN-Bus, kann der Aufwand für die erfindungsgemäße Einrichtung äußerst gering gehalten werden. Für den Fall, daß einzelne Hersteller von Fahrzeugen innerhalb ihrer Bus-Systeme nicht genormte Datenformate verwenden, kann hierbei vorgesehen sein, daß zwischen dem Bus-System und dem Sender eine Einrichtung zur Umwandlung des Datenformats angeordnet ist.

Eine andere vorteilhafte Ausführungsform ermöglicht bereits eine wesentliche Erhöhung der Verkehrssicherheit dadurch, daß die Betriebsdaten Informationen über die jeweilige Position des Fahrzeugs und über die Geschwindigkeit, vorzugsweise nach Betrag und Richtung, umfassen. Mit diesen Informationen kann beispielsweise der Führer eines nachfolgenden Fahrzeuges auf ein vor ihm langsam fahrendes Fahrzeug aufmerksam gemacht werden und gegebenenfalls auch das nachfolgende Fahrzeug selbsttätig gebremst werden. Bei Übertragung der Richtung der Geschwindigkeit kann dabei noch zwischen entgegenkommenden und in gleicher Richtung fahrenden Fahrzeugen unterschieden werden.

Bei dieser Ausgestaltung kann vorgesehen sein, daß die Betriebsdaten ferner Informationen über Änderungen der Betriebsdaten enthalten. Eine solche Änderung kann beispielsweise die Bremsverzögerung sein, um Auffahrunfälle zu verhindern.

Ferner kann bei dieser Ausgestaltung vorgesehen sein, daß die Betriebsdaten Informationen zu Bedieneingaben am Fahrzeug enthalten. Damit ist gegebenenfalls eine noch frühere Erkennung von Änderungen des Verhaltens des betroffenen Fahrzeuges möglich.

Die obengenannte Ausgestaltung kann ferner derart weiter gebildet sein, daß die Betriebsdaten Schaltinformationen, wie beispielsweise Blinker rechts/links an, Licht, Nebellicht an/aus, Scheibenwischer an/aus enthalten. Diese Informationen können einerseits von weiteren Fahrzeugen ausgewertet und den jeweiligen Führern zur Warnung oder allgemeinen Informationen angezeigt werden. Es ist jedoch durchaus möglich, durch die Auswertung derartiger Informationen mit Hilfe von an der Straße angeordneten Empfängern Warnungen vor beispielsweise Nebel oder starkem Regen zu erzeugen.

Eine andere Ausgestaltung der Erfindung sieht vor, daß die Daten Berechtigungsinformationen enthalten. Diese Ausgestaltung kann in vielfältiger Weise angewendet werden, beispielsweise zur besseren Erkennung von Einsatzfahrzeugen (Feuerwehr, Polizei, Krankenwagen), zur Information über Sonderberechtigungen, beispielsweise die Berechtigung zur Benutzung einer Busspur oder als Zugangberechtigung für Parkplätze, Garagen und Privatgelände.

Die Zeitersparnis bis zu einer Reaktion eines nachfolgenden empfangenden Fahrzeuges ist besonders groß, wenn zwischen einem sendenden Fahrzeug, das beispielsweise plötzlich bremst, und dem empfangenden Fahrzeug sich mehrere weitere Fahrzeuge befinden. Dann kann nämlich sofort eine Warnung angezeigt werden, während ohne die erfindungsgemäße Einrichtung mit Hilfe eines Abstandsmeßsystem jeweils von einem zum anderen Fahrzeug eine Verzögerung der Reaktion zu berücksichtigen ist, die sich bis zu dem empfangenden Fahrzeug addiert. Diese Verzögerung kann insbesondere erheblich sein, wenn nicht alle Fahrzeuge mit automatischen Abstandserfassungs- und Bremssystemen ausgerüstet sind. Bei der erfindungsgemäßen Einrichtung kann unabhängig von der eventuell recht langen Reaktionszeit von einzelnen Fahrzeugen auch eine Reaktion eingeleitet werden, wenn ein relativ weit vorausfahrendes Fahrzeug plötzlich bremst.

Sender der erfindungsgemäßen Einrichtung können nicht nur in Fahrzeugen, sondern auch in feststehenden Objektn angeordnet sein. So ist beispielsweise bei einer anderen Weiterbildung der erfindungsgemäßen Einrichtung vorgesehen, daß die Objekte Verkehrssignale oder -zeichen sind, wobei die sicherheitsrelevanten Daten die Position und die jeweilige Bedeutung für Verkehrsteilnehmer enthalten. So kann beispielsweise bei Verkehrssignalen die Position und die jeweilige Signalstellung, also Rot, Gelb oder Grün, gesendet werden.

Im Falle von Verkehrszeichen ist außer einer ständig gleichbleibenden Bedeutung - beispielsweise einer konstanten Geschwindigkeitsbegrenzung - auch das Aussenden einer wechselnden Information möglich, beispielsweise Geschwindigkeitsbegrenzung von 90 km/h, 100 km/h oder 120 km/h. Dabei kann die Information über den Wechsel auf herkömmliche Weise, beispielsweise über Kabel oder über Sender größerer Reichweite, zu dem Verkehrszeichen übertragen werden.

Eine andere vorteilhafte Ausgestaltung besteht darin, daß die Objekte feststehende Verkehrsleiteinrichtungen sind, wobei die sicherheitsrelevanten Daten die Position der jeweiligen Verkehrsleiteinrichtung enthalten. Dadurch können Baken, die beispielsweise Baustellen begrenzen, und andere Fahrbahnbegrenzungen in einfacher Weise gesichert werden.

Damit in Fahrzeugen die gesendeten Informationen genutzt werden können, ist gemäß einer weiteren Ausgestaltung der Erfindung vorgesehen, daß zum Empfang der ausgesendeten Daten ausgebildete Empfänger in Fahrzeugen angeordnet sind. Diese Ausgestaltung ist vorzugsweise derart ausgebildet, daß die Empfänger mit jeweils einer Auswerteeinrichtung verbunden sind, welche die in den empfangenen Daten enthaltenen Informationen mit den Betriebsdaten des eigenen Fahrzeugs vergleicht und danach entscheidet, ob die jeweils von einem Sender eines Objekts empfangenen Daten für das eigene Fahrzeug relevant sind, und daß bei Relevanz der jeweiligen Daten im eigenen Fahrzeug eine Anzeige erfolgt. Damit können dem Führer des Fahrzeuges wichtige Hinweise gegeben werden.

Um jedoch auch im Falle einer Unaufmerksamkeit des Führers eine Reaktion zu ermöglichen, kann bei dieser Ausgestaltung auch vorgesehen sein, daß ferner ein Eingriff in das Antriebs-/Bremssystem des eigenen Fahrzeugs erfolgt. Je nach Ausführung des Fahrzeuges kann dieser Eingriff über entsprechende Steuergeräte erfolgen, die beispielsweise auch die Lichtverteilung und die Navigation betreffen.

Bei einer anderen Ausgestaltung der Erfindung ist vorgesehen, daß ein ortsfester Empfänger zur statistischen Auswertung der von Fahrzeugen empfangenen Geschwindigkeiten ausgebildet ist. Damit können in zuverlässiger Weise Daten zur Verkehrssteuerung und Erzeugung von Verkehrsmeldungen, insbesondere TMC-Meldungen, gewonnen werden.

Bei den bisher aufgeführten Weiterbildungen und Ausgestaltungen der Erfindung wurde vom Aussenden von Daten, die eine Identifizierung des Fahrzeuges, in Form von beispielsweise des polizeilichen Kennzeichens, ermöglichen, abgesehen. Dies kann aus Datenschutzgründen gegeben sein. Sofern es allgemein oder im Einzelfall gestattet ist, kann jedoch gemäß einer anderen Weiterbildung vorgesehen sein, daß die ausgesendeten Daten außer Betriebsdaten Daten zur Identifizierung des Fahrzeuges enthalten.

Diese Weiterbildung ermöglicht weitere vorteilhafte Ausgestaltungen. So kann beispielsweise vorgesehen sein, daß bei einem ortsfesten Empfänger eine Auswerteeinrichtung zuvor gespeicherte Daten mit empfangenen Daten zur Identifizierung vergleicht und bei Übereinstimmung der empfangenen Identifizierung mit einer der gespeicherten Identifizierungen ein Signal abgibt. Mit dieser Ausgestaltung kann beispielsweise ein unrechtmäßig benutztes Fahrzeug oder ein Fahrzeug mit einer speziellen Berechtigung festgestellt werden. Gegebenenfalls kann dann das abgegebene Signal zur Information einer Polizeidienststelle oder sogar zum Schließen oder Öffnen einer Schranke benutzt werden.

Diese Ausgestaltung kann auch derart weitergebildet sein, daß das von der Auswerteeinrichtung abgegebene Signal über einen ebenfalls ortsfesten Sender dem Empfänger des jeweiligen Fahrzeugs übermittelt wird und zur Stillsetzung des Fahrzeugs führt.

Eine weitere die Identifizierung des Fahrzeuges benutzende vorteilhafte Ausführungsform der Erfindung besteht darin, daß mehrere in einem Straßennetz angeordnete ortsfeste Empfänger Identifizierungen an eine Zentralstelle zur Abrechnung von Straßenbenutzungsgebühren weiterleiten.

Schließlich kann eine erfindungsgemäße Einrichtung auch derart ausgebildet sein, daß ein ortsfester Empfänger mit einer Einrichtung zur Aufzeichnung der jeweils von einem Fahrzeug empfangenen Idenfizierung und Geschwindigkeit vorgesehen ist. Damit können in einfacher Weise Geschwindigkeitskontrollen durchgeführt werden, wobei die Nachteile der derzeitigen Radarüberwachungen - nämlich die Auffälligkeit der Radaranlagen, der hohe Personalbedarf und die Meßungenauigkeiten - vermieden werden.

Je nach Erfordernissen und Voraussetzungen im einzelnen können viele aktuelle Informationen, welche für andere Verkehrsteilnehmer von Interesse sind, um die eigenen Entscheidungen besser, schneller und zuverlässiger treffen zu können, gesendet werden. Im folgenden sind solche Informationen aufgeführt, wobei eine Einteilung vorgenommen wurde, auf welche Zeit oder auf welchen Raum sich die Informationen beziehen.
1. aus der Vergangenheit vor der Zeit x oder aus dem Raum x:
   - kommt aus Richtung x
   - Wischanlage war aktiv
   - Licht war an
   - Nebelscheinwerfer waren aktiv
   - Geschwindigkeit war ...
   - habe gebremst
   - Antiblockiersystem war aktiv
   - Fahrdynamikregelung war aktiv
   - habe beschleunigt
   - habe gehalten
   - Lenkwinkel links/rechts
   - Blinker links/rechts
   - Kurvenradius
   - Kurvenrichtung
   - Tendenz der Kurvenrichtung
   - Steigung/Gefälle
   - Tendenz der Steigung/Gefälle
   - Querneigung
   - zulässige Geschwindigkeit
   - Art der Straße, Straßentyp
   - Fahrbahnbreite
   - Fahrspurbreite
   - Spuren pro Fahrtrichtung
   - Abstand zur nächsten Kreuzung
   - Brücke
   - Tunnel
   - Bahnübergang.
2. aus der Gegenwart:
   - bin Verkehrsteilnehmer x (z.B. PKW, LKW, Fußgänger, Motorrad, Trecker, Radfahrer, Fahrzeugmarke, usw.)
   - bin Verkehrsteilnehmer der Gruppe x (z.B. Automarke)
   - Ort (aus Navigation)
   - aktuelle Geschwindigkeit
   - will bremsen
   - Antiblockiersystem ist aktiv
   - Fahrdynamikregelung ist aktiv
   - will beschleunigen
   - Wischanlage ist an
   - Licht ist an
   - Nebelscheinwerfer sind an
   - parke ein
   - fahre in Richtung
   - halte
   - Lenkwinkel links/rechts
   - Blinker links/rechts
   - Kurvenradius
   - Kurvenrichtung
   - Tendenz der Kurvenrichtung
   - Steigung/Gefälle
   - Tendenz der Steigung/Gefälle
   - Querneigung
   - zulässige Geschwindigkeit
   - Art der Straße, Straßentyp
   - Fahrbahnbreite
   - Fahrspurbreite
   - Spuren pro Fahrtrichtung
   - Abstand zur nächsten Kreuzung
   - Brücke
   - Tunnel
   - Bahnübergang
   - Notruf, brauche Hilfe
   - habe technisches Problem
   - Abstand zum Fahrzeug vor mir beträgt x
   - überhole.
3. für die Zukunft:
   - fahre/will nach
   - bewege mich in Richtung
   - sehe Hindernis vor mir am Ort x
   - Geschwindigkeit wird sein (automatische Geschwindigkeitsregelung).

Welche und wieviele dieser Informationen gesendet bzw. von anderen Verkehrsteilnehmern empfangen werden, hängt letztlich davon ab, ob diese Informationen beim sendenden Verkehrsteilnehmer zur Verfügung stehen. Daher kann die Anzahl der Informationen von Objekt zu Objekt verschieden sein. Die Daten können anonym oder auf den jeweiligen Verkehrsteilnehmer bezogen sein. Von den jeweils empfangenden Verkehrsteilnehmern brauchen die Informationen nicht oder nur kurz gespeichert zu werden. Dabei kann die Auswahl der jeweils relevanten Informationen veränderbar sein, beispielsweise von der Position, von einem spezifischen Code oder von einem einer Gruppe zugeordneten Code (beispielsweise die Fahrzeuge eines Herstellers) abhängig sein.

Von einem Verkehrsteilnehmer werden nur diejenigen Informationen gesendet, welche auch bereitstehen. Beispielsweise kann ein parkendes Fahrzeug nur Fahrzeugart und Ort senden. Ein Radfahrer beispielsweise nur Fahrzeugart, Ort und Fahrtrichtung usw. Ein Verkehrsteilnehmer wird nur diejenigen Daten weiterverarbeiten, welche für ihn von Interesse sind, nämlich mit denen er bessere Entscheidungen für sein Verhalten treffen kann. Im Prinzip können alle Verkehrsteilnehmer, auch Fußgänger, mit einem entsprechenden Gerät ausgerüstet werden.

Der Mehraufwand für die erfindungsgemäße Einrichtung beschränkt sich auf eine Sende/Empfangs-Einheit mit einer Schnittstelle zu einem oder mehreren ohnehin vorhandenen Bus-Systemen. Die erforderliche Sendeleistung ist äußerst gering, nämlich im allgemeinen kleiner als die eines Hand-Funktelefons (Handy). Bei Vorhandensein von Funkgeräten können diese gegebenenfalls auch mitbenutzt werden.

Ausführungsbeispiele der Erfindung sind in der Zeichnung anhand mehrerer Figuren dargestellt und in der nachfolgenden Beschreibung näher erläutert. Es zeigt:
- Fig. 1: eine erfindungsgemäße Einrichtung, die über mehrere Bus-Systeme an Informationsquellen und -senken innerhalb eines Fahrzeugs angeschlossen ist,
- Fig. 2: ein Flußdiagramm zur Auswahl von zu sendenden Informationen und
- Fig. 3: ein Flußdiagramm zur Auswahl von empfangenen Informationen zur weiteren Verarbeitung.

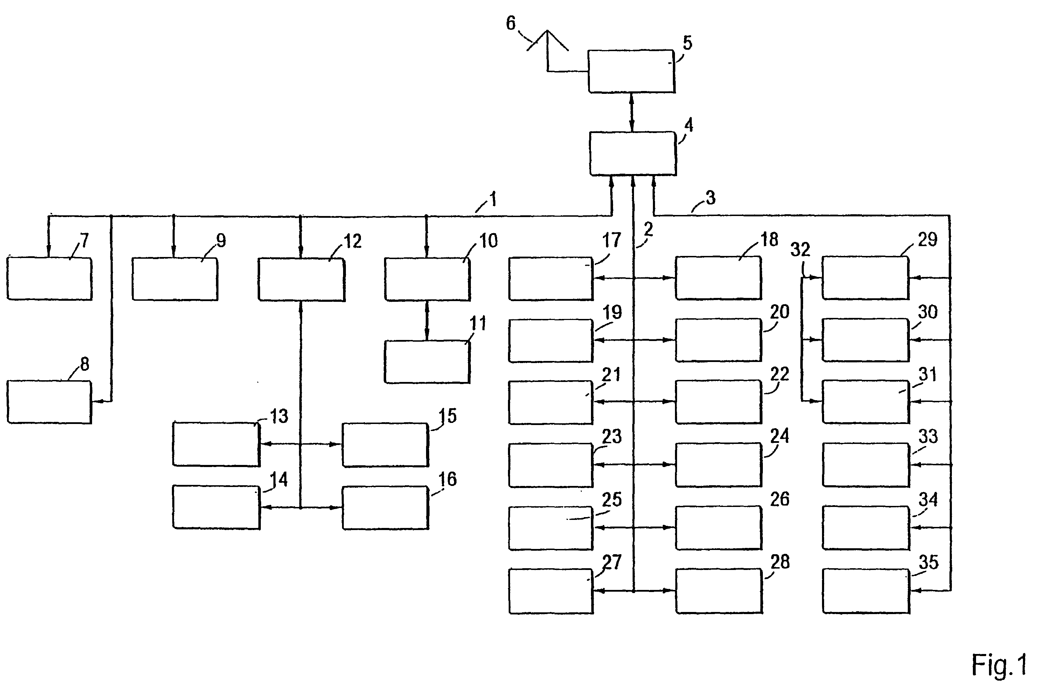

Fig. 1 zeigt in Form eines Blockschaltbildes ein umfangreiches Informationssystem eines Fahrzeugs, wobei ein Hinzufügen weiterer nicht dargestellter Komponenten durchaus möglich ist, in vielen Fällen jedoch auch weitaus weniger Komponenten vorhanden sein können. Wegen der unterschiedlichen Anforderungen, insbesondere an die Datenübertragungskapazität, sind insgesamt drei Bus-Systeme 1, 2, 3 vorgesehen, die über eine Bus-Schnittstelle 4 mit einer Sende/Empfangs-Einrichtung 5 verbunden sind, die eine Antenne 6 aufweist.

Die Bus-Schnittstelle 4 steuert den Zugriff der Sende/Empfangs-Einrichtung 5 auf die einzelnen Bus-Systeme 1, 2, 3 und konvertiert auch gegebenenfalls unterschiedliche Datenformate. Über das Bus-System 1 werden folgende Komponenten gesteuert bzw. überwacht: Heizung/Klima 7, Fahrwerk 8, Fernbedienung 9, automatische Leuchtweitenregelung 10, Scheinwerfer bzw. Außenleuchten 11 und über eine weitere Schnittstelle 12 die Betätigung bzw. Kontrolle von Fenstern 13, Türen 14, Sitzen 15 und Rückhaltesystemen 16.

Das zweite Bus-System 2 verbindet folgende Komponenten untereinander und über die Schnittstelle 4 mit der Sende/Empfangs-Einrichtung 5: Innenbeleuchtung 17, Check-Control 18, Lenkrad bzw. Lenkung 19, Anzeigeeinheit/Kombi-Instrument 20, Radio 21, Funkgerät/Telefon 22, Hifi-Verstärker 23, Bedienteil eines speziellen Fahrzeugrechners 24, Einparkhilfen 25, Navigationssystem 26, Fernsehen/Videorecorder 27 und PC gegebenenfalls mit Internet-Anschluß 28.

Das dritte Bus-System 3 dient in erster Linie zur Steuerung und Überwachung des Antriebs-Stranges bzw. der Bremsen und ist dazu mit den Komponenten Motor-Elektronik 29, Getriebe-Elektronik 30 und einer Komponente 31 verbunden, die ein Antiblockiersystem, eine Antischlupfregelung und/oder eine Fahrdynamikregelung enthält. Die Komponenten 29 bis 31 sind wegen der Bedeutung und des Umfangs des Datenaustausches untereinander mit einem weiteren Bus-System 32 unabhängig von dem Bus-System 3 verbunden. An das Bus-System 3 sind ferner eine Geschwindigkeitsregelungsanlage 33, eine automatische Fahrkontrolle (Automatic Cruise Control) 34 und ein Steuergerät 35 für einen Airbag angeschlossen. Die Sende/Empfangs-Einrichtung 5 hat über die Bus-Schnittstelle 4 grundsätzlich Zugang zu allen Informationen, die über die Bus-Systeme 1, 2, 3 ausgetauscht werden. Dabei kann vom Fachmann festgelegt werden, welche Informationen gesendet bzw. empfangen werden sollen. Im folgenden werden einige Beispiele und die Auswertung dieser Informationen kurz erläutert.

So kann beispielsweise der Zustand der Komponente 31 (ABS + ASR + FDR) zu einer gezielten Erzeugung von Verkehrsmeldungen benutzt werden. Wird nämlich jedesmal bei Ansprechen einer Antischlupfregelung oder des Antiblockiersystems eine Meldung darüber gesendet, die von einem am Fahrbahnrand angeordneten Empfänger empfangen wird, kann aus einer Häufung derartiger Meldungen geschlossen werden, daß sich im Bereich dieses Empfängers Glatteis auf der Fahrbahn gebildet hat. Aus einer Häufung von Meldungen über eingeschaltete Scheinwerfer kann auf Nebel oder Regen geschlossen werden, falls das Einschalten nicht aus anderen Gründen (Dunkelheit bei Nacht, gesetzliche Vorschrift) erfolgt.

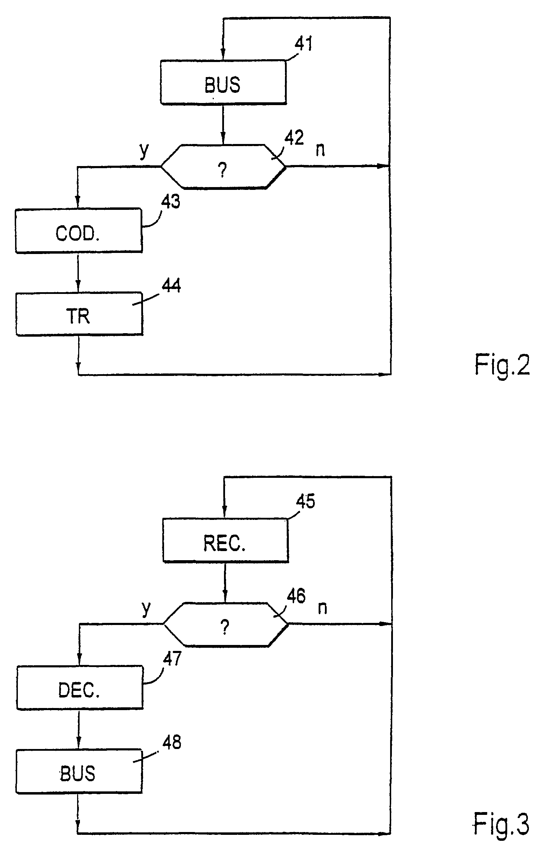

Bei dem in Fig. 2 dargestellten Flußdiagramm wird davon ausgegangen, daß bei 41 alle auf den Bus-Systemen vorhandenen Daten zur Verfügung stehen. Jeweils ein eine Information verkörpernder Datensatz wird bei 42 daraufhin untersucht, ob er für andere Verkehrsteilnehmer wichtig sein könnte und ob er diesen mitgeteilt werden soll. Ist dieses nicht der Fall, wird bei 41 die nächste Information ausgelesen. Soll jedoch die Information anderen mitgeteilt werden, so erfolgt bei 43 eine Codierung und bei 44 die Abstrahlung durch die Sende/Empfangs-Einrichtung 5. Obwohl die Erfindung von Sendern mit kurzer Reichweite von beispielsweise einigen 100 m ausgeht, kann im Einzelfall eine Aussendung von einzelnen Informationen über eine größere Reichweite, beispielsweise über Mobilfunk vorgesehen sein.

Das Flußdiagramm gemäß Fig. 3 geht davon aus, daß ein Empfänger zunächst bei 45 alle Informationen empfängt, worauf bei 46 die jeweilige Information darauf geprüft wird, ob sie für das eigene Fahrzeug wichtig ist. Ist dieses nicht der Fall, wird bei 45 die nächste Information empfangen und bei 46 geprüft. Wird eine Information als für das eigene Fahrzeug wichtig erachtet, erfolgt bei 47 eine Decodierung und bei 48 eine Übergabe an das Bus-System des eigenen Fahrzeugs.

Neben den zuvor beschriebenen Möglichkeiten ist es auch sinnvoll, insbesondere Sender an feststehenden Objekten, wie Verkehrssignalen oder -Kennzeichen mit einem GPS-Empfänger auszustatten. Unter GPS-Empfänger sind alle solche Empfänger zu verstehen, die in der Lage sind, aufgrund von Satellitenortungssystemen den Empfängerstandort selbsttätig zu ermitteln. Die so gewonnene Information über den Standort des Empfängers kann nun zu dem ebenfalls an diesem Standort befindlichen Sender übertragen werden, der diese Information zusammen mit den zuvor beschriebenen weiteren Informationen aussendet. Dadurch kennt der ortsfeste Sender genau seinen Standpunkt, was es ermöglicht, beispielsweise Navigationssysteme an Bord von vorbeifahrenden Fahrzeugen zu eichen. weitere Möglichkeiten sind darin zu sehen, daß vor vorausliegenden Gefahren gewarnt werden kann, wenn der Ort der Gefahr bekannt ist. So kann beispielsweise ein Sender dahingehend programmiert sein, daß beim Kilometer 87 eine Sperrung der rechten Fahrspur einer Autobahn gegeben ist. Der Sender selbst kann nun vor dem Hindernis auf der Autobahn postiert werden. Aufgrund des GPS Empfängers ist nun der Sender in der Lage, selbsttätig die Entfernung bis zur Baustelle zu berechnen und so die Meldung ausgeben, daß beispielsweise in tausend Meter mit der Sperrung der rechten Fahrspur zu rechnen ist. Diese Information wird nun fahrzeugseitig empfangen und auf einem Instrument des Fahrzeuges wiedergegeben. Durch diese Maßnahme wird der Einsatz eines Senders sehr flexibel und kann ohne weitere eigene Einstellungen auf eine beliebige Entfernung vor einer Baustelle postiert werden.

Ein weiterer vorteilhafter Anwendungsbereich der Erfindung ist bei Autovermietungen zu sehen. Hierbei rüstet der Vermieter seine Fahrzeuge mit einer individuellen Kennung aus und der Möglichkeit der Fernabfrage, z. B. des Kilometerstandes. Beim Passieren des Fahrzeuges an einem Sender, der in der Nähe der Autovermietung angebracht ist, kann so eine Abfrage gestartet werden, so daß das Fahrzeug an die Bake nicht nur seinen Kilometerstand sondern unter anderem auch den allgemeinen Zustand des Fahrzeuges mitteilt. Die Abrechnungsunterlagen können so dann bereits erstellt werden, während der Kunde zum Schalter geht. Außerdem weiß die Vermietstation, welche Fahrzeuge sich in welchem Bereich des Firmenparkplatzes befinden.

## Patentansprüche

1. Einrichtung zur Erhöhung der Verkehrssicherheit, **dadurch gekennzeichnet, daß** Objekte, die sich auf oder an der Straße befinden können, mit Sendern (5) geringer Reichweite versehen sind, die sicherheitsrelevante Daten in einer Form aussenden, die von Empfangern in anderen auf oder an der Straße befindlichen Fahrzeugen empfangbar ist, daß zum Empfang der ausgesendeten Daten ausgebildete Empfänger (5) in den Fahrzeugen angeordnet sind, daß die Empfänger (5) mit jeweils einer Auswerteeinrichtung verbunden sind, welche die in den empfangenen Daten enthaltenen Informationen mit den Betriebsdaten des eigenen Fahrzeugs vergleicht und danach entscheidet, ob die jeweils von einem Sender eines Objekts empfangenen Daten für das eigene Fahrzeug relevant sind, und daß bei Relevanz der jeweiligen Daten im eigenen Fahrzeug eine Anzeige erfolgt und daß ferner ein Eingriff in das Antriebs-/Bremssystem (29 bis 31) des eigenen Fahrzeugs erfolgt.

2. Einrichtung nach Anspruch 1, **dadurch gekennzeichnet, daß** die Objekte Fahrzeuge sind und daß die sicherheitsrelevanten Daten Betriebsdaten des jeweiligen Fahrzeugs enthalten.

3. Einrichtung nach Anspruch 2, **dadurch gekennzeichnet, daß** die Betriebsdaten von mindestens einer anderen Einrichtung (7 bis 35) des Fahrzeugs über ein Bus-System (1, 2, 3) zuführbar sind.

4. Einrichtung nach Anspruch 3, **dadurch gekennzeichnet, daß** zwischen dem Bus-System (1, 2, 3) und dem Sender (5) eine Einrichtung (4) zur Umwandlung des Datenformats angeordnet ist.

5. Einrichtung nach einem der Ansprüche 2 bis 4, **dadurch gekennzeichnet, daß** die Betriebsdaten Informationen über die jeweilige Position des Fahrzeugs und über die Geschwindigkeit, vorzugsweise nach Betrag und Richtung, umfassen.

6. Einrichtung nach Anspruch 5, **dadurch gekennzeichnet, daß** die Betriebsdaten ferner Informationen über Änderungen der Betriebsdaten enthalten.

7. Einrichtung nach einem der Ansprüche 5 oder 6, **dadurch gekennzeichnet, daß** die Betriebsdaten Informationen zu Bedieneingaben am Fahrzeug enthalten.

8. Einrichtung nach einem der Ansprüche 5 bis 7, **dadurch gekennzeichnet, daß** die Betriebsdaten Schaltinformationen, wie beispielsweise Blinker rechts/links an, Licht, Nebellicht an/aus, Scheibenwischer an/aus enthalten.

9. Einrichtung nach einem der Ansprüche 2 bis 8, **dadurch gekennzeichnet, daß** die Daten Berechtigungsinformationen enthalten.

10. Einrichtung nach Anspruch 1 **dadurch gekennzeichnet, daß** die Objekte Verkehrssignale oder -zeichen sind, wobei die sicherheitsrelevanten Daten die Position und die jeweilige Bedeutung für Verkehrsteilnehmer enthalten.

11. Einrichtung nach Anspruch 2, **dadurch gekennzeichnet, daß** die Objekte feststehende Verkehrsleiteinrichtungen sind, wobei die sicherheitsrelevanten Daten die Position der jeweiligen Verkehrsleiteinrichtung enthalten.

12. Einrichtung nach einem der Ansprüche 2 bis 9, **dadurch gekennzeichnet, daß** die ausgesendeten Daten außer Betriebdaten Daten zur Identifizierung des Fahrzeuges enthalten.

13. Einrichtung nach einem der vorhergehenden Ansprüche, **dadurch gekennzeichnet, daß** dem Sender (5) das Standortsignal eines am Ort des Senders (5) befindlichen GPS-Empfangers zugeführt ist.

## Claims

1. Device for improving road safety, **characterized in that** objects which can be located on or by the road are provided with short-range transmitters (5) which emit safety-related data in a form which can be received by receivers in other vehicles located on or by the road, **in that** receivers (5) which are designed to receive the data which is emitted are arranged in the vehicles, **in that** the receivers (5) are in each case connected to an evaluation device which compares the information stored in the received data with the operating data of the vehicle in question and then decides whether the data which is received in each case by a transmitter of an object is relevant to the vehicle in question, and **in that**, when the respective data in the vehicle in question is relevant, an indication is given, and **in that** in addition there is intervention into the driving/braking system (29 to 31) of the vehicle in question.

2. Device according to Claim 1, **characterized in that** the objects are vehicles, and **in that** the safety-related data contain operating data of the respective vehicle.

3. Device according to Claim 2, **characterized in that** the operating data can be supplied by at least one other device (7 to 35) of the vehicle via a bus system (1, 2, 3).

4. Device according to Claim 3, **characterized in that** a device (4) for converting the data format is arranged between the bus system (1,2,3) and the transmitter (5).

5. Device according to one of Claims 2 to 4, **characterized in that** the operating data comprises information relating to the respective position of the vehicle and relating to the speed, preferably in terms of absolute value and direction.

6. Device according to Claim 5, **characterized in that** the operating data also contains information relating to changes in the operating data.

7. Device according to one of Claims 5 or 6, **characterized in that** the operating data contains information relating to operating inputs at the vehicle.

8. Device according to one of Claims 5 to 7, **characterized in that** the operating data contains switching information such as right-hand/left-hand indicator light on, light, fog light on/off, windscreen wiper on/off.

9. Device according to one of Claims 2 to 8, **characterized in that** the data contains authorization information.

10. Device according to Claim 1, **characterized in that** the objects are traffic signals or traffic signs, the safety-related data containing the position and the respective meaning for road users.

11. Device according to Claim 2, **characterized in that** the objects are fixed traffic control devices, the safety-related data containing the position of the respective traffic control devices.

12. Device according to one of Claims 2 to 9, **characterized in that** the data which is emitted contains not only operating data but also data for identifying the vehicle.

13. Device according to one of the preceding claims, **characterized in that** the location signal of a GPS receiver which is located at the location of the transmitter (5) is supplied to the transmitter (5).

## Revendications

1. Installation pour augmenter la sécurité routière,
**caractérisée en ce que**
des objets qui peuvent se trouver sur ou près de la chaussée sont pourvus d'émetteurs (5) d'une portée réduite qui envoient des données de sécurité sous une forme qui peut être reçue par des récepteurs dans d'autres véhicules qui se trouvent sur ou près de la chaussée, pour la réception des données émises des récepteurs (5) adéquats sont placés dans les véhicules, les récepteurs (5) sont respectivement reliés à une installation d'évaluation qui compare les informations contenues dans les données reçues avec les données de fonctionnement du véhicule en question puis décide si les données reçues par un émetteur d'un objet sont pertinentes pour le véhicule en question et, dans le cas de données pertinentes, un affichage est réalisé dans le véhicule en question et de plus une intervention est réalisée sur le système d'entraînement/de freinage (29 à 31) du véhicule en question.

2. Installation selon la revendication 1,
**caractérisée en ce que**
les objets sont des véhicules et les données de sécurité contiennent des données de fonctionnement du véhicule donné.

3. Installation selon la revendication 2,
**caractérisée en ce que**
les données de fonctionnement peuvent être amenées à partir d'au moins une autre installation (7 à 35) du véhicule par l'intermédiaire d'un système de bus (1, 2, 3).

4. Installation selon la revendication 3,
**caractérisée en ce qu'**
entre le système de bus (1, 2, 3) et l'émetteur (5) est placée une installation (4) pour convertir le format des données.

5. Installation selon l'une des revendications 2 à 4,
**caractérisée en ce que**
les données de fonctionnement comprennent des informations sur la position du véhicule et sur la vitesse, de préférence selon la valeur et la direction.

6. Installation selon la revendication 5,
**caractérisée en ce que**
les données de fonctionnement contiennent en outre des informations sur les modifications des données de fonctionnement.

7. Installation selon l'une des revendications 5 ou 6,
**caractérisée en ce que**
les données de fonctionnement contiennent des informations sur les entrées de commande sur le véhicule.

8. Installation selon l'une des revendications 5 à 7,
**caractérisée en ce que**
les données de fonctionnement contiennent des informations de connexion comme par exemple le clignotant droite/gauche, l'éclairage, l'antibrouillard éteint/allumé, l'essuie-glace allumé/éteint.

9. Installation selon l'une des revendications 2 à 8,
**caractérisée en ce que**
les données contiennent des informations d'autorisation.

10. Installation selon la revendication 1,
**caractérisée en ce que**
les objets sont des feux de circulation ou des signaux routiers, les données de sécurité contenant la position et la signification respective pour l'usager de la route.

11. Installation selon la revendication 2,
**caractérisée en ce que**
les objets sont des installations de contrôle du trafic, les données de sécurité contenant la position de l'installation de contrôle du trafic concernée.

12. Installation selon l'une des revendications 2 à 9,
**caractérisée en ce que**
les données émises outre les données de fonctionnement contiennent des données pour identifier le véhicule.

13. Installation selon l'une des revendications précédentes,
**caractérisée en ce que**
le signal de position d'un récepteur GPS situé à l'endroit du récepteur (5) est amené au récepteur (5).
